# EUROPEAN PATENT APPLICATION

(11) **EP 4 749 081 A1**
(43) Date of publication of application: **27.05.2026**
(21) Application number: 25218779.4
(22) Date of filing: 26.11.2025
(51) Int. Cl.: F01D 5/02, F01D 25/16, F02C 7/06

(54) **ASSEMBLIES FOR AN AIRCRAFT POWERPLANT AND METHOD FOR BALANCING A ROTATING STRUCTURE OF A GAS TURBINE ENGINE**

(30) Priority: 26.11.2024 US 202418960255
(71) Applicant: Pratt & Whitney Canada Corp., (01BE5) Longueuil, QC J4G 1A1 (CA)
(72) Inventor: RICHARDSON, Tyler, (01BE5) Longueuil, J4G 1A1 (CA); TOMES, Nathan, (01BE5) Longueuil, J4G 1A1 (CA)
(74) Representative: Dehns

(57) **Abstract**

An aircraft powerplant (20) assembly includes a compressor section (36), a combustor section (37), a turbine section (38), a flowpath and a rotating structure (70). The flowpath extends through the compressor section (36), the combustor section (37) and the turbine section (38). The rotating structure (70) includes a balancing device (76) and a bladed rotor disposed in the turbine section (38) or the compressor section (36). The balancing device (76) is configured to rotationally balance the rotating structure (70) about a rotational axis (72) of the rotating structure (70). The balancing device (76) includes a mounting platform (108) and a plurality of balancing masses (88). The mounting platform (108) includes a plurality of mounting apertures (120). The balancing masses (88) are arranged circumferentially about the axis (72). Each of the balancing masses (88) includes a shank (130) and a head (128). The shank (130) of each of the balancing masses (88) is threaded into a respective one of the mounting apertures (120). The head (128) of each of the balancing masses (88) is disposed radially inboard of the mounting platform (108).

## Description

### TECHNICAL FIELD

This disclosure relates generally to an aircraft powerplant and, more particularly, to systems and methods for rotationally balancing a rotating structure of the aircraft powerplant.

### BACKGROUND INFORMATION

Various systems and methods are known in the art for rotationally balancing a rotating structure of an aircraft powerplant such as a gas turbine engine. While these known balancing systems and methods have various benefits, there is still room in the art for improvement.

### SUMMARY

According to an aspect of the present disclosure, an assembly is provided for an aircraft powerplant. This assembly includes a compressor section, a combustor section, a turbine section, a flowpath and a rotating structure. The flowpath extends through the compressor section, the combustor section and the turbine section. The rotating structure includes a balancing device and a bladed rotor disposed in the turbine section or the compressor section. The balancing device is configured to rotationally balance the rotating structure about a rotational axis of the rotating structure. The balancing device includes a mounting platform and a plurality of balancing masses. The mounting platform includes a plurality of mounting apertures. The balancing masses are arranged circumferentially about the axis. Each of the balancing masses includes a shank and a head. The shank of each of the balancing masses is threaded into a respective one of the mounting apertures. The head of each of the balancing masses is disposed radially inboard of the mounting platform.

According to another aspect of the present disclosure, another assembly is provided for an aircraft powerplant. This assembly includes a rotating structure. The rotating structure includes a shaft, a balancing device, a plurality of components and a bladed rotor for the aircraft powerplant. The balancing device is configured to rotationally balance the rotating structure about a rotational axis of the rotating structure. The balancing device includes a device mount and a plurality of balancing masses. The device mount and the components are axially clamped together in an axial stack to attach the device mount and the components to the shaft. Each of the balancing masses is attached to the device mount through a respective threaded interface.

According to still another aspect of the present disclosure, a method is provided for balancing a rotating structure of a gas turbine engine. During this method, the rotating structure is provided with a balancing device. The balancing device includes a mounting platform and a plurality of balancing masses. The mounting platform includes a plurality of mounting apertures arranged circumferentially about a rotational axis of the rotating structure. Each of the balancing masses includes a shank and a head. The shank of each of the balancing masses is threaded into a respective one of the mounting apertures. The head of each of the balancing masses is disposed radially inboard of the mounting platform. The shank of one or more of the balancing masses is selectively rotated to rotationally balance the rotating structure about the rotational axis.

The following optional features may be applied to any of the above aspects.

The device mount may include a plurality of mounting apertures arranged circumferentially about the rotational axis. Each of the balancing masses may include a shank and a head. The shank of each of the balancing masses may be threaded into a respective one of the mounting apertures.

The head of each of the balancing masses may be radially captured within an annular channel of the balancing device.

The head of a first of the balancing masses may be configured to move radially inward or outward by turning the first of the balancing masses about a centerline axis of the first of the balancing masses.

The shank of a first of the balancing masses may project through the a first of the mounting apertures to a shank distal end located radially outboard of the mounting platform.

The first of the balancing masses may have a wrenching feature at the shank distal end.

The wrenching feature may be configured as or otherwise include a recess with a polygonal cross-sectional geometry.

The assembly may also include a stationary structure axially overlapping and circumscribing the rotating structure. The stationary structure may include an access port. The wrenching feature may be accessible radially through the access port when the rotating structure is clocked to a rotational position about the rotational axis where the first of the balancing masses is circumferentially aligned with the access port.

The balancing device may also include a self-locking feature configured to rotationally lock the shank of a first of the balancing masses within a first of the mounting apertures.

The head of a first of the balancing masses may be disposed closer to the rotational axis than the head of a second of the balancing masses.

The head of a first of the balancing masses and the head of a second of the balancing masses may be equispaced from the rotational axis.

A width of the head along the axis may be greater than a width of the shank along the axis.

The head of each of the balancing masses may be radially captured within the mounting platform.

The balancing masses may be equispaced circumferentially about the rotational axis.

Each of the balancing masses may have a common weight.

Each of the balancing masses may have a common center of gravity location.

The balancing masses may be non-equispaced circumferentially about the rotational axis.

A first of the balancing masses may have a first weight. A second of the balancing masses may have a second weight that is different than the first weight.

A first of the balancing masses may have a first center of gravity location. A second of the balancing masses may have a second center of gravity location that is different than the first center of gravity location.

The rotating structure may also include a shaft and a plurality of components. The balancing device may also include a device mount comprising the mounting platform. The device mount and the components may be axially clamped in a common axial stack to attach the device mount and the components to the shaft.

The balancing device may also include a sleeve and a device mount. The sleeve may be disposed radially inboard of the balancing masses. The device mount may include a mount base and the mounting platform. The mounting platform may project axially out from the mount base at a radial outer end of the mount base. The mounting platform may axially overlap and circumscribe the sleeve. The sleeve may be abutted axially against the mount base. The head of each of the balancing masses may be located radially between the sleeve and the mounting platform.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft powerplant.
FIG. 2 is a partial sectional illustration of a powerplant rotating structure.
FIG. 3 is a cross-sectional illustration of a portion of the powerplant rotating structure.
FIG. 4 is an end view illustration of a balancing mass at a wrenching feature.
FIG. 5 is a cross-sectional illustration of a portion of the powerplant rotating structure with another arrangement of balancing masses.
FIG. 6 is a flow diagram of a method for balancing a rotating structure of an aircraft powerplant.
FIG. 7 is a partial sectional illustration of the powerplant rotating structure during a balancing operation.
FIG. 8 is a cross-sectional illustration of a portion of the powerplant rotating structure with still another arrangement of balancing masses.
FIG. 9 is a partial sectional illustration of the powerplant rotating structure with another arrangement during the balancing operation.

### DETAILED DESCRIPTION

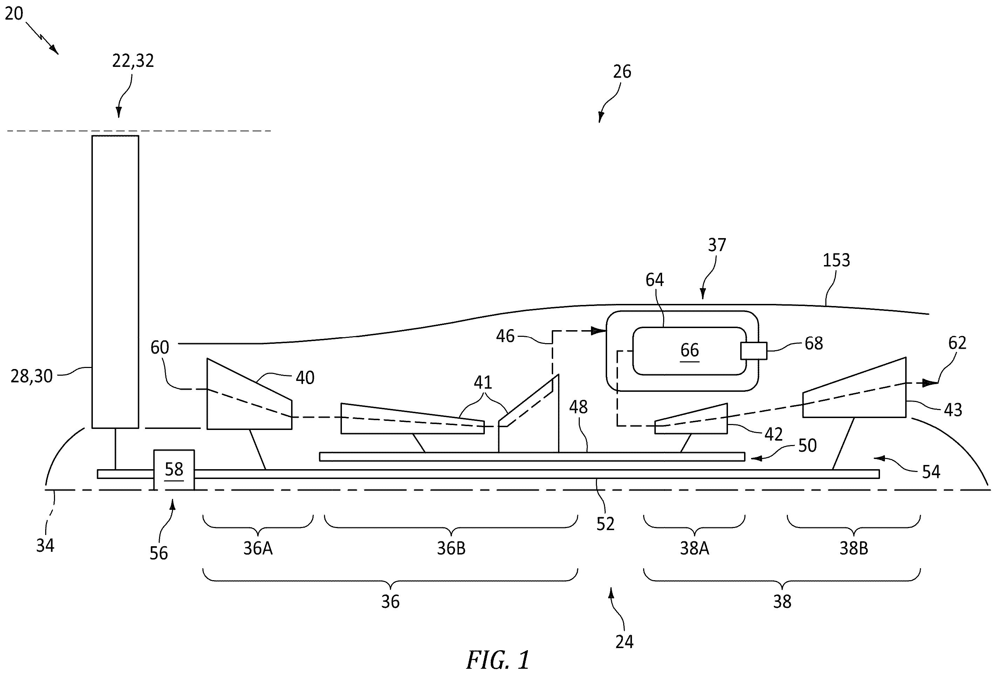

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. The aircraft powerplant 20 may be configured as, or otherwise included as part of, a propulsion system for the aircraft. The aircraft powerplant 20 may also or alternatively be configured as, or otherwise included as part of, an electrical power system for the aircraft. The aircraft powerplant 20 of FIG. 1 includes a mechanical load 22 and a core 24 of a gas turbine engine 26, where the engine core 24 (e.g., a gas generator) is configured to power operation of the mechanical load 22.

The mechanical load 22 may be configured as or otherwise include a rotor 28 mechanically driven by the engine core 24. This driven rotor 28 may be a bladed propulsor rotor 30 for the aircraft propulsion system. The propulsor rotor 30 may be a ducted propulsor rotor, an open propulsor rotor (e.g., an un-ducted propulsor rotor) or any other type of air moving rotor. For example, where the gas turbine engine 26 is a turbofan engine, the ducted propulsor rotor may be a fan rotor. Where the gas turbine engine 26 is a turboprop engine, the open propulsor rotor may be a propeller rotor. Where the gas turbine engine 26 is a turboshaft engine, the open propulsor rotor may be a rotorcraft rotor such as a helicopter main rotor or a helicopter tail rotor. Alternatively, the driven rotor 28 may be configured as a generator rotor of an electric power generator for the aircraft electrical power system; e.g., an auxiliary power unit (APU) system. The present disclosure, however, is not limited to the foregoing exemplary mechanical loads nor to the foregoing exemplary gas turbine engines. The gas turbine engine 26, for example, may alternatively be configured as a turbojet engine, a propfan engine, a pusher fan engine or any other type of gas turbine engine operable to power the operation of the mechanical load 22. However, for ease of description, the mechanical load 22 is described below as a propulsor section 32 of the gas turbine engine 26, and the driven rotor 28 is described below as the propulsor rotor 30 within the propulsor section 32.

The gas turbine engine 26 extends axially along an axis 34 from a forward, upstream end of the gas turbine engine 26 to an aft, downstream end of the gas turbine engine 26. Briefly, this powerplant axis 34 may be a centerline axis of the gas turbine engine 26 and/or its members. The powerplant axis 34 may also be a rotational axis of one or more members of the gas turbine engine 26. The gas turbine engine 26 of FIG. 1 includes the propulsor section 32, a compressor section 36, a combustor section 37 and a turbine section 38. The compressor section 36 of FIG. 1 includes a low pressure compressor (LPC) section 36A and a high pressure compressor (HPC) section 36B. The turbine section 38 of FIG. 1 includes a high pressure turbine (HPT) section 38A and a low pressure turbine (LPT) section 38B.

The LPC section 36A includes a low pressure compressor (LPC) rotor 40. The HPC section 36B includes a high pressure compressor (HPC) rotor 41. The HPT section 38A includes a high pressure turbine (HPT) rotor 42. The LPT section 38B includes a low pressure turbine (LPT) rotor 43. The LPC rotor 40, the HPC rotor 41, the HPT rotor 42 and the LPT rotor 43 each include a rotor base (e.g., a disk or a hub) and a plurality of rotor blades (e.g., airfoils, rotor vanes, etc.). The rotor blades are arranged and may be equispaced circumferentially around the respective rotor base in one or more arrays. With this arrangement, the rotor blades may be arranged into one or more stages longitudinally along an (e.g., annular) internal flowpath 46 of the gas turbine engine 26 and its engine core 24. Each of the rotor blades is connected to the respective rotor base. Each of the rotor blades projects radially (e.g., spanwise) out from the respective rotor base into the engine flowpath 46 and to a distal tip of the respective rotor blade.

The HPC rotor 41 is coupled to and rotatable with the HPT rotor 42. The HPC rotor 41 of FIG. 1, for example, is connected to the HPT rotor 42 by a high speed shaft 48. At least (or only) the HPC rotor 41, the HPT rotor 42 and the high speed shaft 48 collectively form a high speed rotating structure 50; e.g., a high speed spool of the engine core 24. This high speed rotating structure 50 may be rotatable about the powerplant axis 34.

The LPC rotor 40 is coupled to and rotatable with the LPT rotor 43. The LPC rotor 40 of FIG. 1, for example, is connected to the LPT rotor 43 by a low speed shaft 52. At least (or only) the LPC rotor 40, the LPT rotor 43 and the low speed shaft 52 collectively form a low speed rotating structure 54; e.g., a low speed spool of the engine core 24. This low speed rotating structure 54 is further coupled to the propulsor rotor 30 - the driven rotor 28 - through a drivetrain 56. This drivetrain 56 may be configured as a geared drivetrain, where a geartrain 58 (e.g., a transmission, a speed change device, an epicyclic geartrain, etc.) is disposed between and operatively couples the propulsor rotor 30 to the low speed rotating structure 54 and its LPT rotor 43. With this arrangement, the propulsor rotor 30 may rotate at a different (e.g., slower) rotational speed than the low speed rotating structure 54 and its LPT rotor 43. However, the drivetrain 56 may alternatively be configured as a direct-drive drivetrain, where the geartrain 58 is omitted. With such an arrangement, the propulsor rotor 30 rotates at a common (the same) rotational speed as the low speed rotating structure 54 and its LPT rotor 43. This low speed rotating structure 54 and/or the propulsor rotor 30 may be rotatable about the powerplant axis 34. Alternatively, the propulsor rotor 30 may be offset from the engine core 24 such that the propulsor rotor 30 rotates about an axis which is (e.g., laterally and/or axially) offset from the powerplant axis 34.

The engine flowpath 46 (e.g., a core flowpath) extends longitudinally within the gas turbine engine 26 and its engine core 24 from an airflow inlet 60 into the engine flowpath 46 to a combustion products exhaust 62 from the engine flowpath 46. The engine flowpath 46 of FIG. 1, for example, extends sequentially longitudinally through the LPC section 36A, the HPC section 36B, the combustor section 37, the HPT section 38A and the LPT section 38B, from the flowpath inlet 60 to the flowpath exhaust 62. With this arrangement, the engine flowpath 46 extends sequentially longitudinally across the LPC rotor 40, the HPC rotor 41, a (e.g., annular) combustor 64 within the combustor section 37, the HPT rotor 42 and the LPT rotor 43 between the flowpath inlet 60 and the flowpath exhaust 62.

During operation of the aircraft powerplant 20 and its gas turbine engine 26, ambient air may be directed across the propulsor rotor 30 (e.g., the fan rotor, the propeller rotor, etc.) and into the engine core 24 through the flowpath inlet 60. This air entering the engine flowpath 46 may be referred to as "core air". The core air is compressed by the LPC rotor 40 and the HPC rotor 41 and directed into a (e.g., annular) combustion chamber 66 within the combustor 64. Fuel is introduced into the engine flowpath 46 by one or more fuel injectors 68. This fuel is mixed with the compressed core air to provide a fuel-air mixture. The fuel-air mixture is ignited and combustion products thereof flow through and sequentially drive rotation of the HPT rotor 42 and the LPT rotor 43. The rotation of the HPT rotor 42 and the LPT rotor 43 respectively drive rotation of the LPC rotor 40 and the HPC rotor 41 and, thus, the compression of the air received from the flowpath inlet 60. The rotation of the LPT rotor 43 drives rotation of the propulsor rotor 30 - the driven rotor 28. The rotation of the propulsor rotor 30 propels some of the air flow thereacross (e.g., the air not entering the engine core 24) outside of the engine core 24 to provide engine thrust. Of course, where the driven rotor 28 is alternatively configured as the generator rotor, the rotation of this generator rotor may facilitate generation of electricity.

While the aircraft powerplant 20 and its gas turbine engine 26 are described above with a particular two rotating structure arrangement, the present disclosure is not limited thereto. For example, the LPC rotor 40 may be omitted to configure the LPT rotor 43 as a power turbine (PT) rotor. In another example, the aircraft powerplant 20 and its gas turbine engine 26 may also include another rotating structure; e.g., an intermediate speed spool of the engine core 24. In still another example, the high speed rotating structure 50 may be omitted to provide the gas turbine engine 26 with a single rotating structure arrangement.

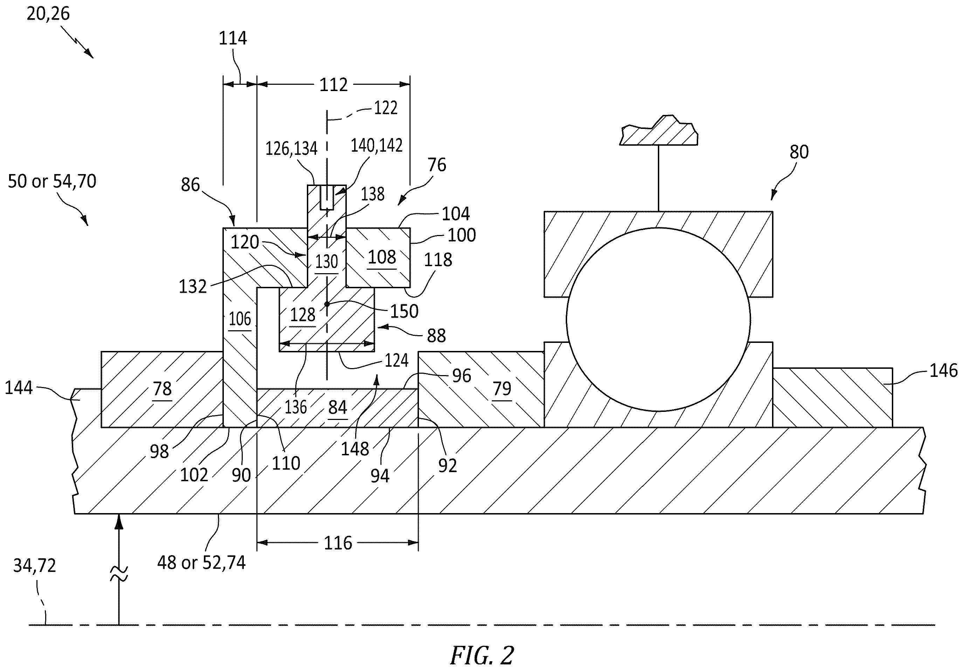

FIG. 2 illustrates a portion of a powerplant rotating structure 70 along an axis 72 such as the powerplant axis 34 (or another rotational axis). This powerplant rotating structure 70 may be configured as the high speed rotating structure 50, the low speed rotating structure 54 or another rotating structure within the aircraft powerplant 20 and its gas turbine engine 26. The powerplant rotating structure 70 is rotatable about the structure axis 72. The powerplant rotating structure 70 of FIG. 2 includes a powerplant shaft 74 (e.g., the high speed shaft 48, the low speed shaft 52, etc.), a rotating structure balancing device 76 and one or more additional powerplant components 78-80. The powerplant rotating structure 70, of course, may also include one or more additional powerplant components other than those shown in FIG. 2. For example, where the powerplant rotating structure 70 is configured as one of the rotating structures 50, 54, the powerplant rotating structure 70 also includes one or more engine rotors (e.g., 40 and 43, 41 and 42 as shown in FIG. 1).

The balancing device 76 is configured to rotationally balance the powerplant rotating structure 70 about the structure axis 72 while, for example, the powerplant rotating structure 70 remains partially or completely installed within the aircraft powerplant 20 and its gas turbine engine 26. The balancing device 76 of FIG. 2 includes a device sleeve 84 (e.g., a spacer ring), a device mount 86 and one or more balancing masses 88.

The device sleeve 84 extends axially along the structure axis 72 between opposing axial ends 90 and 92 of the device sleeve 84. The device sleeve 84 extends radially from a radial inner side 94 of the device sleeve 84 to a radial outer side 96 of the device sleeve 84. The device sleeve 84 extends circumferentially about (e.g., completely around) the structure axis 72. The device sleeve 84 may thereby have a full-hoop (e.g., tubular) geometry.

The device mount 86 extends axially along the structure axis 72 between opposing axial ends 98 and 100 of the device mount 86. The device mount 86 extends radially from a radial inner side 102 of the device mount 86 to a radial outer side 104 of the device mount 86. The device mount 86 of FIG. 2 includes a mount base 106 and a mounting platform 108 (e.g., a flange, a rim, a ring, etc.). The device mount 86 and each of its members 106 and 108 extend circumferentially about (e.g., completely around) the structure axis 72. The device mount 86 and its members 106 and 108 may thereby each have a full-hoop geometry. The device mount 86 of FIG. 2, for example, has an annular geometry and the mounting platform 108 has a tubular geometry, providing a respective half of the device mount 86 with an L-shaped sectional geometry when viewed, for example, in an axial reference plane parallel with (e.g., including) the structure axis 72.

The mount base 106 is disposed at (e.g., on, adjacent or proximate) the mount first end 98. The mount base 106 of FIG. 2, for example, extends axially along the structure axis 72 from the mount first end 98 to an axial second end 110 of the mount base 106. The mount base 106 extends radially between and to the mount inner side 102 and the mount outer side 104.

The mounting platform 108 is connected to (e.g., formed integral with or otherwise attached to) the mount base 106. The mounting platform 108 projects axially out from the mount base 106 at its base second end 110 along the structure axis 72 to the mount second end 100. Here, an axial length 112 of the mounting platform 108 may be (e.g., at least 2x, 5x or 10x) larger than an axial width 114 of the mount base 106. This platform length 112 may also be equal to or smaller than an axial length 116 of the device sleeve 84. The mounting platform 108 is disposed at the mount outer side 104. The mounting platform 108 of FIG. 2, for example, extends radially from a radial inner side 118 of the mounting platform 108 to the mount outer side 104. With the foregoing arrangement, the mounting platform 108 is axially cantilevered from the mount base 106. An axial distal end of the mounting platform 108 at the mount second end 100, for example, may be structurally unsupported by another powerplant component.

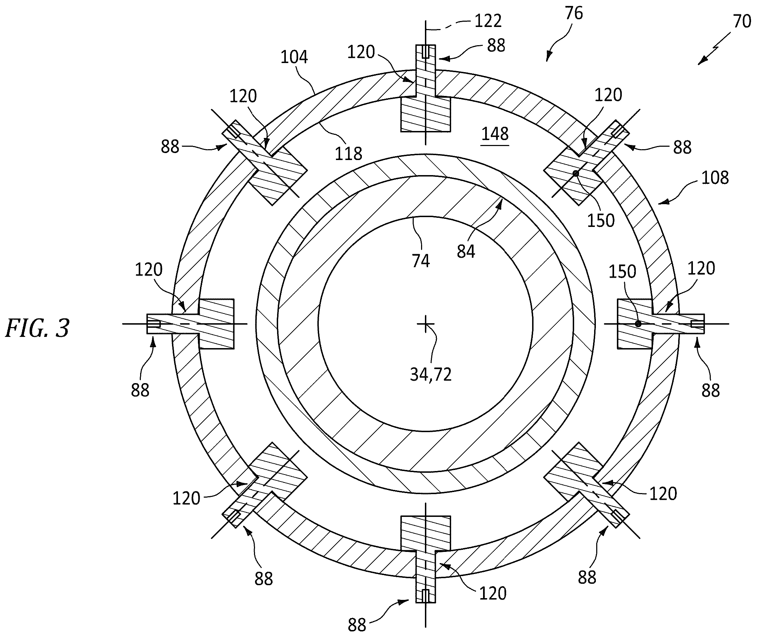

The mounting platform 108 includes one or more mounting apertures 120; e.g., tapped holes. Referring to FIG. 3, the mounting apertures 120 are arranged circumferentially about the structure axis 72 in an annular array; e.g., a circular array. Within the array, the mounting apertures 120 may (or may not) be equispaced circumferentially about the structure axis 72. The mounting apertures 120 may also be axially aligned along the structure axis 72. Each mounting aperture 120 of FIG. 2, for example, may be located a common (the same) axial distance from mount base 106. Each of the mounting apertures 120 extends radially through the mounting platform 108 between and to the platform inner side 118 and the mount outer side 104.

Each of the balancing masses 88 extends longitudinally along a longitudinal centerline 122 of the respective balancing mass 88 (e.g., radially relative to the structure axis 72) form a radial inner end 124 of the respective balancing mass 88 to a radial outer end 126 of the respective balancing mass 88. Each balancing mass 88 includes a mass head 128 and a mass shank 130.

The mass head 128 is disposed at the mass inner end 124. The mass head 128 of FIG. 2, for example, extends longitudinally along its mass centerline 122 (e.g., radially relative to the structure axis 72) from the mass inner end 124 to a radial outer end 132 of the mass head 128. This mass head 128 may be a solid portion of the respective balancing mass 88.

The mass shank 130 is connected to (e.g., formed integral with or otherwise attached to) the mass head 128. The mass shank 130 projects longitudinally along its mass centerline 122 (e.g., radially relative to the structure axis 72) out from the mass head 128 and its head outer end 132 to a longitudinal distal end 134 of the mass shank 130 at the mass outer end 126. At least a portion or an entirety of a longitudinal length of the mass shank 130 is threaded. Here, an axial width 136 of the mass head 128 is (e.g., at least 1.5x, 2x, 3x or 4x) larger than an axial width 138 of the mass shank 130.

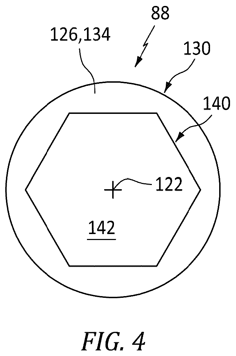

The mass shank 130 of FIG. 2 includes a wrenching feature 140 at the shank distal end 134. This wrenching feature 140 may be configured as a recess 142 in the mass shank 130. The recess 142 of FIG. 2, for example, projects partial longitudinally (e.g., radially inward) into the mass shank 130 from the shank distal end 134 to an end of the recess 142. The recess 142 also extends laterally within the mass shank 130. Referring to FIG. 4, the recess 142 may be configured with a polygonal cross-sectional geometry when viewed, for example, in a reference plane perpendicular to the respective mass centerline 122. Examples of the polygonal cross-sectional geometry include, but are not limited to, a square geometry and a hexagonal geometry. With such an arrangement, a tool may be mated with the wrenching feature 140 for turning the respective balancing mass 88 about its mass centerline 122.

Referring to FIG. 2, each of the balancing masses 88 is mounted to the device mount 86. Each mass shank 130, for example, is threaded into a respective one of the mounting apertures 120 with the mass head 128 radially below the mounting platform 108. The mass shank 130 may project radially through the respective mounting aperture 120 such that the shank distal end 134 is located radially outboard of the device mount 86 and its mounting platform 108. With this arrangement, the balancing masses 88 of FIG. 3 are arranged and may (or may not) be equispaced circumferentially about the structure axis 72 in an annular array (e.g., a circular array) according to the pattern of the mounting apertures 120. The mounting platform 108 also axially overlaps and circumscribes the balancing mass array and each of its balancing masses 88.

The balancing device 76 and the one or more additional powerplant components 78-80 may be mounted together onto the powerplant shaft 74. Each of the components 78-80, 84 and 86 of FIG. 2, for example, is mated with the powerplant shaft 74. The powerplant shaft 74 projects axially through a center bore of each component 78-80, 84, 86 such that the respective component 78-80, 84, 86 axially overlaps and circumscribes the powerplant shaft 74. The components 78, 86, 84, 79 and 80 may be sequentially arranged axially along the powerplant shaft 74, and clamped axially between two elements 144 and 146. One of these elements (e.g., 144) may be a shoulder on the powerplant shaft 74. Another one of these elements (e.g., 146) may be a stack nut threaded onto the powerplant shaft 74. With this arrangement, the components may be axially clamped in a common (the same) axial stack to attach (e.g., rotationally and axially fix) each of the components 78-80, 84, 86 to the powerplant shaft 74.

Within the stack, the first component 78 axially contacts, abuts axially against and/or otherwise axially engages the mount base 106 and the mount first end 98. The second component 79 axially contacts, abuts axially against and/or otherwise axially engages the device sleeve 84 and its sleeve second end 92. Within the balancing device 76, the device sleeve 84 and its sleeve first end 90 axially contacts, abuts axially against and/or otherwise axially engages the mount base 106 and its base second end 110. The mounting platform 108 is spaced radially outboard from the device sleeve 84. The mounting platform 108 axially overlaps and circumscribes the device sleeve 84. With this arrangement, the balancing device 76 is configured with an internal device channel 148; e.g., an axial open groove. The device channel 148 is formed by and extends radially between the device sleeve 84 and its sleeve outer side 96 and the mounting platform 108 and its platform inner side 118. The device channel 148 is further formed by and projects partially axially into the balancing device 76 to the mount base 106 and its base second end 110.

The mass heads 128 are arranged within the device channel 148. Each of the mass heads 128 may be axially spaced from the mount base 106 and its base second end 110. Each of the mass heads 128 may also be (e.g., completely) axially recessed into the device channel 148 from the mount second end 100. A longitudinal length of each balancing mass 88 may be sized larger than a radial height of the device channel 148 between the device sleeve 84 and the mounting platform 108. With this arrangement, each balancing mass 88 and its mass head 128 may be captured radially within the device channel 148. This may prevent one of the balancing masses 88 from unthreading from a respective mounting aperture 120 and liberating from the device mount 86. Of course, each threaded interface between a respective mass shank 130 and the mounting platform 108 may be provided with a self-locking feature to rotationally lock the respective mass shank 130 in the respective mounting aperture 120. For example, one of the threads on the mass shank 130 and/or one of the threads in the mounting aperture 120 may be upset to provide a locking nut type functionality. The present disclosure, however, is not limited to such an exemplary self-locking feature arrangement.

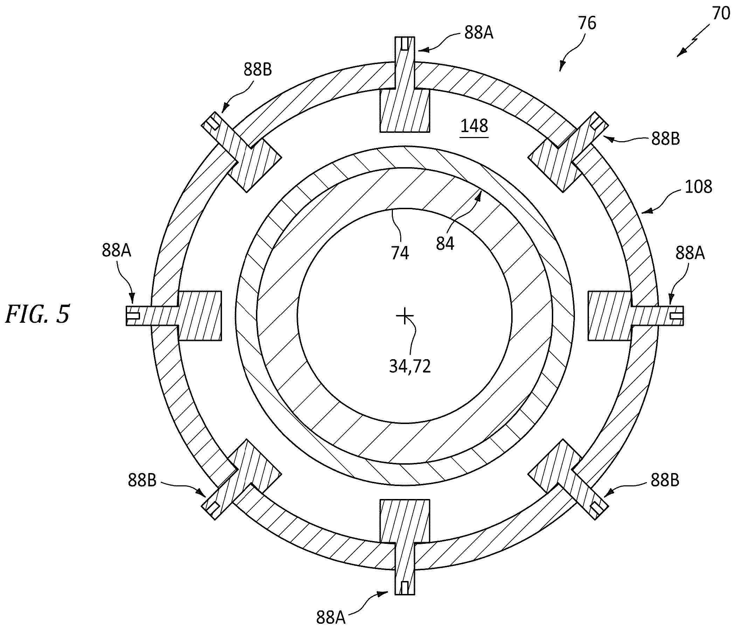

In some embodiments, referring to FIG. 3, each of the balancing masses 88 may be configured with a common weight. Each of the balancing masses 88 of FIG. 3, for example, is provided with a common configuration; e.g., an identical weight, geometry, etc. The balancing masses 88 may thereby share a common relative center of mass location 150. In other embodiments, referring to FIG. 5, one or more of the balancing masses 88 may be provided with a different configuration than one or more other balancing masses 88. A first set of the balancing masses 88A, for example, may have a first head size with a first weight. A second set of the balancing masses 88B may have a second head size with a second weight that is different than the first weight. The first balancing masses 88A may thereby be heavier than the second balancing masses 88B. Moreover, the first balancing masses 88A may (or may not) have a different relative center of mass location than the second balancing masses 88B.

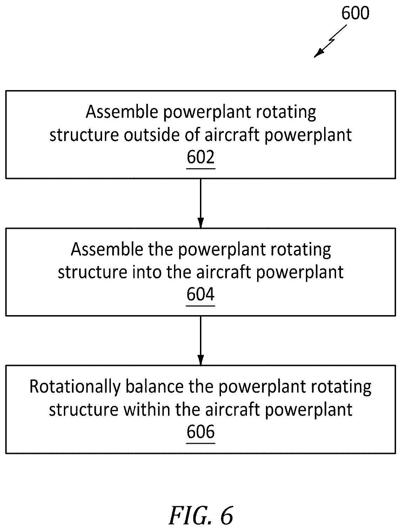

FIG. 6 is a flow diagram of a method 600 for (e.g., in situ) balancing a rotating structure of an aircraft powerplant. For ease of description, this balancing method 600 is described below with respect to the powerplant rotating structure 70 shown in FIGS. 2 and 3. The present disclosure, however, is not limited to such an exemplary powerplant rotating structure nor to use of the exemplary balancing device described herein.

In step 602, the powerplant rotating structure 70 is assembled outside of the aircraft powerplant 20 and its gas turbine engine 26. During this assembly, the powerplant rotating structure 70 may be rotationally balanced on a balancing rig using various known balancing techniques.

In step 604, the powerplant rotating structure 70 is assembled into the aircraft powerplant 20 and its gas turbine engine 26. The previously assembled and balanced powerplant rotating structure 70, for example, may be partially or completely disassembled and then reassembled into the aircraft powerplant 20 and its gas turbine engine 26. During this reassembly process, slight variations due to manufacturing tolerances, etc. may lead to a slight misbalance of the powerplant rotating structure 70.

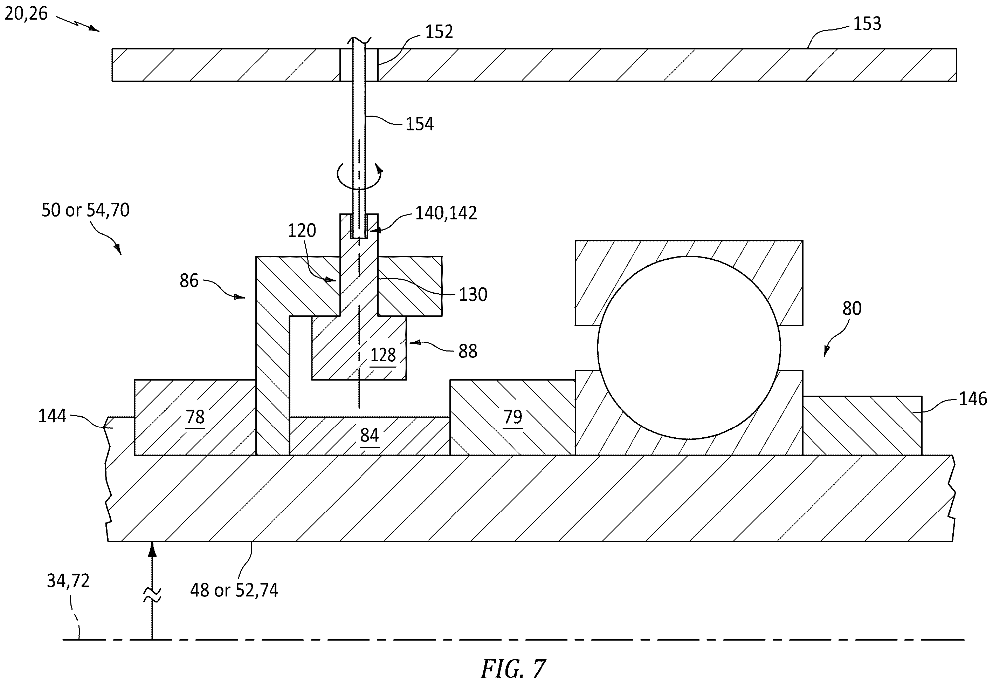

In step 606, the powerplant rotating structure 70 is rotationally balanced while partially or completely assembled within the aircraft powerplant 20 and its gas turbine engine 26. For example, referring to FIG. 7, the powerplant rotating structure 70 may be rotated (e.g., manually by hand via an accessory gearbox, a tower shaft, etc.) such that a respective one of the balancing masses 88 is circumferentially aligned with an access port 152 in a stationary structure 153 of the aircraft powerplant 20; e.g., an engine case, a frame, etc. This stationary structure 153 is disposed radially outboard of, axially overlaps and circumscribes at least a portion of the powerplant rotating structure 70 with the balancing device 76. Once the access port 152 is aligned with the respective balancing mass 88, a tool 154 may be passed through the access port 152 and mated with the respective wrenching feature 140. The tool 154 may be twisted to rotate the respective balancing mass 88 about its mass centerline 122 and further thread or unthread the respective mass shank 130 within the respective mounting aperture 120. The mass head 128 may thereby be moved radially inward or radially outward. Using this technique with a single one of the balancing masses 88, some of the balancing masses 88 or all of the balancing masses 88, a technician may rotationally balance the powerplant rotating structure 70 from outside of the stationary structure 153 while the powerplant rotating structure 70 remains installed within the aircraft powerplant 20 and its gas turbine engine 26. By contrast, using traditional balancing techniques, the powerplant rotating structure 70 would need to be removed from the aircraft powerplant 20 and rebalanced on the balancing rig.

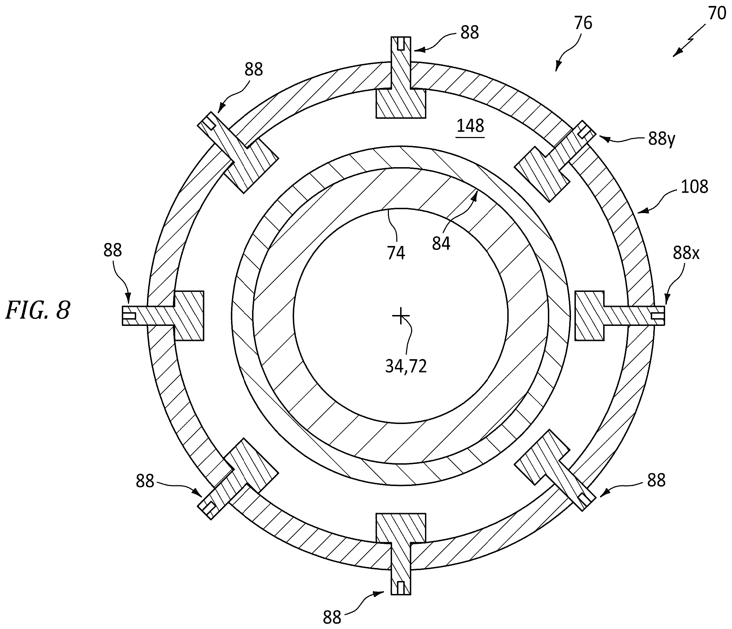

In some embodiments, referring to FIG. 2, some or all of the balancing masses 88 may be radially equispaced from the structure axis 72 following the in situ balancing of the powerplant rotating structure 70. In other embodiments, referring to FIG. 8, some or all of the balancing masses 88 may be radially spaced from the structure axis 72 by different distances. The balancing mass (e.g., 88x) of FIG. 8, for example, is disposed closer to the structure axis 72 than the balancing mass (e.g., 88y). Of course, the positions of these balancing masses 88 will vary depending on the rotational balancing requirements of the powerplant rotating structure 70.

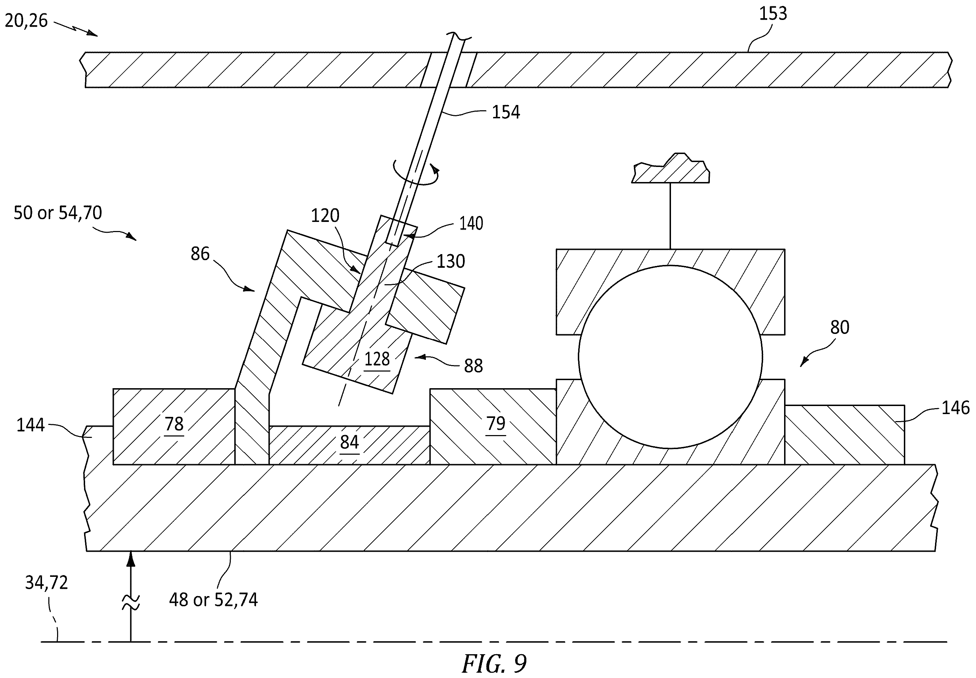

While radial access to each balancing mass 88 is described above as extending along a trajectory which is perpendicular to the structure axis 72 (e.g., see FIG. 7), the present disclosure is not limited thereto. For example, referring to FIG. 9, the radial access may alternatively extend along a trajectory which is offset from the structure axis 72 by an offset angle less than ninety degrees (90°) and greater than zero degrees (0°).

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a compressor section (36);
a combustor section (37);
a turbine section (38);
a flowpath extending through the compressor section (36), the combustor section (37) and the turbine section (38); and
a rotating structure (70) including a balancing device (76) and a bladed rotor disposed in the compressor section (36) or the turbine section (38), the balancing device (76) configured to rotationally balance the rotating structure (70) about a rotational axis (72) of the rotating structure (70), and the balancing device (76) including a mounting platform (108) and a plurality of balancing masses (88);
the mounting platform (108) comprising a plurality of mounting apertures (120); and
the plurality of balancing masses (88) arranged circumferentially about the axis (72), each of the plurality of balancing masses (88) including a shank (130) and a head (128), the shank (130) of each of the plurality of balancing masses (88) threaded into a respective one of the plurality of mounting apertures (120), and the head (128) of each of the plurality of balancing masses (88) disposed radially inboard of the mounting platform (108).

2. The assembly of claim 1, wherein the head (128) of a first of the plurality of balancing masses (88) is configured to move radially inward or outward by turning the first of the plurality of balancing masses (88) about a centerline axis (72) of the first of the plurality of balancing masses (88).

3. The assembly of claim 1 or 2, wherein the shank (130) of a first of the plurality of balancing masses (88) projects through the a first of the plurality of mounting apertures (120) to a shank distal end (134) located radially outboard of the mounting platform (108).

4. The assembly of claim 3, wherein the first of the plurality of balancing masses (88) has a wrenching feature (140) at the shank distal end (134),
wherein, optionally, the wrenching feature (140) comprises a recess (142) with a polygonal cross-sectional geometry.

5. The assembly of claim 4, further comprising:
a stationary structure (153) axially overlapping and circumscribing the rotating structure (70), the stationary structure (153) comprising an access port (152);
the wrenching feature (140) accessible radially through the access port (152) when the rotating structure (70) is clocked to a rotational position about the rotational axis (72) where the first of the plurality of balancing masses (88) is circumferentially aligned with the access port (152).

6. The assembly of any preceding claim, wherein the balancing device (76) further includes a self-locking feature configured to rotationally lock the shank (130) of a first of the plurality of balancing masses (88) within a first of the plurality of mounting apertures (120).

7. The assembly of any preceding claim, wherein:
the head (128) of a first of the plurality of balancing masses (88) is disposed closer to the rotational axis (72) than the head (128) of a second of the plurality of balancing masses (88); or
the head (128) of a first of the plurality of balancing masses (88) and the head (128) of a second of the plurality of balancing masses (88) are equispaced from the rotational axis (72).

8. The assembly of any preceding claim, wherein a width of the head (128) along the axis (72) is greater than a width of the shank (130) along the axis (72).

9. The assembly of any preceding claim, wherein the head (128) of each of the plurality of balancing masses (88) is radially captured within the mounting platform (108).

10. The assembly of any preceding claim, wherein the plurality of balancing masses (88) are equispaced circumferentially about the rotational axis (72).

11. The assembly of any preceding claim, wherein:
each of the plurality of balancing masses (88) have a common weight; and/or
each of the plurality of balancing masses (88) have a common center of gravity location.

12. The assembly of any preceding claim, wherein:
the rotating structure (70) further includes a shaft (74) and a plurality of components (78-80);
the balancing device (76) further includes a device mount (86) comprising the mounting platform (108); and
the device mount (86) and the plurality of components (78) are axially clamped in a common axial stack to attach the device mount (86) and the plurality of components (78) to the shaft.

13. The assembly of any preceding claim, wherein the balancing device (76) further includes:
a sleeve (84) disposed radially inboard of the plurality of balancing masses (88); and
a device mount (86) including a mount base (106) and the mounting platform (108), the mounting platform (108) projecting axially out from the mount base (106) at a radial outer end of the mount base (106), the mounting platform (108) axially overlapping and circumscribing the sleeve (84), and the sleeve (84) abutted axially against the mount base (106);
the head (128) of each of the plurality of balancing masses (88) located radially between the sleeve (84) and the mounting platform (108).

14. An apparatus for an aircraft powerplant (20), comprising:
a rotating structure (70) including a shaft (74), a balancing device (76), a plurality of components (78-80) and a bladed rotor for the aircraft powerplant (20);
the balancing device (76) configured to rotationally balance the rotating structure (70) about a rotational axis (72) of the rotating structure (70), the balancing device (76) including a device mount (86) and a plurality of balancing masses (88);
the device mount (86) and the plurality of components (78) axially clamped together in an axial stack to attach the device mount (86) and the plurality of components (78) to the shaft (74); and
each of the plurality of balancing masses (88) attached to the device mount (86) through a respective threaded interface,
wherein, optionally:
the device mount (86) comprises a plurality of mounting apertures (120) arranged circumferentially about the rotational axis (72); and
each of the plurality of balancing masses (88) includes a shank (130) and a head (128), the shank (130) of each of the plurality of balancing masses (88) is threaded into a respective one of the plurality of mounting apertures (120),
wherein, further optionally, the head (128) of each of the plurality of balancing masses (88) is radially captured within an annular channel (148) of the balancing device (76).

15. A method for balancing a rotating structure of a gas turbine engine (26), comprising:
providing the rotating structure (70) with a balancing device (76), wherein the balancing device (76) includes a mounting platform (108) and a plurality of balancing masses (88), the mounting platform (108) comprises a plurality of mounting apertures (120) arranged circumferentially about a rotational axis (72) of the rotating structure (70), each of the plurality of balancing masses (88) includes a shank (130) and a head (128), the shank (130) of each of the plurality of balancing masses (88) is threaded into a respective one of the plurality of mounting apertures (120), and the head (128) of each of the plurality of balancing masses (88) is disposed radially inboard of the mounting platform (108); and
selectively rotating the shank (130) of one or more of the plurality of balancing masses (88) to rotationally balance the rotating structure (70) about the rotational axis (72).
